# EUROPEAN PATENT SPECIFICATION

(11) **EP 3 762 848 B1**
(45) Date of publication and mention of the grant of the patent: **29.03.2023**
(21) Application number: 18719078.0
(22) Date of filing: 10.04.2018
(51) Int. Cl.: G06F 21/56, G06N 3/04, G06N 3/08

(54) **DEVICE AND METHOD FOR CLASSIFYING PROGRAM BEHAVIOUR**
VORRICHTUNG UND VERFAHREN ZUR KLASSIFIZIERUNG VON PROGRAMMVERHALTEN
DISPOSITIF ET PROCÉDÉ DE CLASSEMENT DE COMPORTEMENT DE PROGRAMME

(43) Date of publication of application: 13.01.2021
(73) Proprietor: HUAWEI TECHNOLOGIES CO., LTD., Shenzhen, Guangdong 518129 (CN)
(72) Inventor: LASKOV, Pavel, 80992 Munich (DE); NETH, Alexander, 80992 Munich (DE); CHIRITA, Adrian, 80992 Munich (DE); SRNDIC, Nedim, 80992 Munich (DE)
(74) Representative: Roth, Sebastian
(86) International application number: PCT/EP2018/059159
(87) International publication number: WO 2019/197022

(56) References cited:
- CN-A- 107 798 243
- US-A1- 2017 017 793
- US-B1- 9 705 904

## Description

### TECHNICAL FIELD

The present invention relates to the technical field of classifying program behaviour. In particular, the present invention relates to a device for classifying program behaviour, wherein the device bases on a convolutional neural network (CNN). Further, the present invention relates to a corresponding method for classifying program behaviour. According to the present invention, the CNN architecture can be combined in the device with novel features for visualization of CNN models and predictions.

### BACKGROUND

Classification of program behavior is an essential task of information security. It can be carried out either at end hosts during their operation, or at special systems designed for program analysis. The two most important decisions to be made with respect to program behavior are, whether a program is malicious or benign, or whether it belongs to a set of pre-defined classes. The latter is for instance typical for classifying malicious programs into a set of known families.

Program behavior classification belongs to the area of dynamic program analysis, since classification features are obtained by executing programs in a monitoring environment. This is different from static program analysis, wherein classification features are obtained without program execution. Applying existing algorithms used for static program analysis to program behavior classification does not yield sufficient detection performance. Further, few conventional approaches provide visualization of their predictions.

Classification of malware behavior can particularly be categorized along the following criteria: usage of API call names, usage of API call arguments, classifier type, visualization of prediction, explanation of models.

Most conventional approaches use API call names and various types of classifiers. While this combination of features is capable of solving the classification problem with some degree of accuracy - which is still not optimal - it does not provide any explanation of decisions. Some conventional approaches use API call arguments in addition to API call names, in order to improve the accuracy, but they provide no means for explanation or visualization of their results. In fact, none of the previously known approaches is able to achieve on the one hand a good degree of accuracy, and on the other hand, to visualize its predictions and explain its models.

Notably, the majority of modern malware analysis and classification approaches use machine learning methods. Visualization of models and decisions made by machine learning is an ongoing important research area, especially in the field of neural networks (NN).

For example, the document US 2017/017793 A1 discloses a system for training a neural network adapted for classifying one or more scripts. The system may include at least one processor and at least one memory. The memory may include program code which when executed by the at least one memory provides operations including: receiving a disassembled binary file that includes a plurality of instructions; processing the disassembled binary file with a convolutional neural network configured to detect a presence of one or more sequences of instructions amongst the plurality of instructions and determine a classification for the disassembled binary file based at least in part on the presence of the one or more sequences of instructions; and providing, as an output, the classification of the disassembled binary file.

The document CN 107 798 243 A discloses a terminal application detection method. This method includes the step of obtaining a sample training set of terminal applications, said sample training set includes normal and malicious terminal applications; the sample training set is obtained via a preprocessing step and input into an initial convolutional neural network model for training, the convolutional neural network obtained through training is used for detecting whether a terminal application is malicious or not.

In summary, a device or method for classifying program behavior with high accuracy and the ability to explain or visualize, to an operator, the reasons for the classification result, does not exist.

### SUMMARY

In view of the above-mentioned problems and disadvantages, the present invention aims to improve the conventional approaches for classifying program behavior. In particular, the method has the objective to provide an improved device and method for classifying program behavior. In particular, the device and method should be able to accurately classify program behavior into a set of pre-defined classes. Further, the device and method should be able to explain and visualize, to an operator, the reasons for the classification.

The object of the present invention is achieved by the solution provided in the enclosed independent claims. Advantageous implementations of the present invention are further defined in the dependent claims. In the following, parts of the description and drawings referring to embodiments not covered by the claims, are not part of the invention, but are illustrative examples necessary for understanding the invention.

In particular the present invention proposes a device based on a CNN architecture, which enables high classification accuracy of sequences of API calls. Further, for a visual explanation of the classification results, new characteristics of CNN models are defined, which can be visualized and can thus deliver valuable insights into the reasons for specific classification decisions. These characteristics can specifically be obtained by post-processing the CNN model with algorithms presented in this invention.

The input to the device is a sequence of OS API calls and their arguments. Such sequence can, for instance, be obtained from a sandbox or any other system for monitoring program execution. Two typical classification scenarios for the invention are classification of programs into malicious and benign, and classification of malicious programs into a pre-defined set of families.

A first aspect of the present invention provides a device for classifying program behavior, the device comprising a CNN and being configured to provide, as an input to the CNN, a sequence of action-patterns pairs, wherein an action is indicative of a name or group of names of an Application Programing Interface, API, function call and a pattern is indicative of an argument or set of arguments of an API function call, transform, in an embedding layer of the CNN, each action-pattern pair into an embedding vector and concatenate the embedding vectors to obtain a single vector, process, in a convolution layer of the CNN, the single vector by a plurality of convolution filters to generate a series of output values per filter, determine, in a max-pooling layer of the CNN, a maximum output value in each series of output values, and transform, in a dense layer of the CNN, the maximum output values into a plurality of classification results.

The present invention according to the first aspect has a number of advantages over the conventional approaches. Firstly, an intrinsic combination of API names and arguments is enabled in the CNN architecture. As a result, a CNN training algorithm can automatically determine how to best combine the names and arguments in a decision function, which leads to better detection accuracy. Secondly, intrinsic handling of the sequential nature of API names and arguments is used. Some conventional approaches aggregate their features over the entire sequence. While such approaches can be easily integrated with machine learning tools, they cannot pinpoint crucial subsequences typical for some classes of program behaviors. The device of the first aspect, however, can not only find such subsequences, but can also determine the optimal weight for such subsequences in a final decision function.

Each API call is characterized by the API function name and its arguments. Since API function names and their arguments are very diverse and specific, appropriate abstractions may be defined to enable better understanding of program behavior semantics. An abstract notion of "action" characterizes a certain group of API function names. For example, an action *"FileAccess"* may be defined to characterize all API function names related to file access operations. An abstract notion of a "pattern" characterizes certain features of function arguments. For example, a pattern *"WindowsRootFolder"* may characterizes any specific path to a Windows OS root folder (which may be different on different installations of Windows OS) found in function arguments.

In an implementation form of the first aspect, the plurality of classification results includes the respective probabilities for the sequence of action-pattern pairs to fall into a plurality of defined classes of program behavior.

In a further implementation form of the first aspect, for transforming the sequence of action-pattern pairs into the embedding vectors, the device is configured to input a first sequence of actions and a second sequence of patterns into input nodes of the CNN, wherein the input nodes of the CNN are connected to embedding nodes of the CNN in the embedding layer.

In a further implementation form of the first aspect, for processing the single vector in the convolution layer of the CNN, the plurality of convolution filters is configured to produce a sum of the element-wise products between each convolution filter and the embedding vectors across a plurality of consecutive positions in the sequence of action-pattern pairs.

In a further implementation from of the first aspect, for determining the maximum output value in the max-pooling layer of the CNN, the device is configured to move an activation window of each convolution filter along the sequence of action-pattern pairs and activate the convolution filter after each step of movement.

In a further implementation form of the first aspect for transforming the maximum output value in the dense layer of the CNN, the device is configured to compute a weighted sum of the maximum output values and apply a logistic regression transformation to the weighted sum.

In a further implementation form of the first aspect, the device further comprises a visualization unit configured to generate a visual representation based on the activation values of the convolutional filters, the output of the convolutional layer of the CNN, the output of the max-pooling layer of the CNN, and/or weights used in the dense layer of the CNN.

The visualization unit of the device provides at least the following advantages. Firstly, visualization of decisions made by the CNN are enabled. Thus, the user can better understand which features in a given behavioral sequence are characteristic for each decision. Secondly, a visualization of class-conditional activations of convolution filters learned by the CNN is enabled. This feature enables the user to understand, which features in behavioral sequences (used as training data) are characteristic for each convolution filter.

In a further implementation form of the first aspect, the visualization unit is configured to visualize the program behavior according to the sequence of action-pattern pairs as the visual representation.

In a further implementation form of the first aspect, the visualization of the program behavior includes the contribution of each convolution filter, in particular the activation value of the convolution filter.

In a further implementation form of the first aspect, the visualization unit is configured to visualize decisions of the CNN as the visual representation.

In a further implementation form of the first aspect, the visualization unit is configured to visualize activations of convolutional filters as the visual representation.

In a further implementation form of the first aspect, the visualization of the filter activations shows the part of the sequence of action-pattern pairs that generates the maximum filter activation.

In a further implementation from the first aspect, the devices configured to obtain training data including a set of sample behavior reports, each behavior report being associated with a defined class of program behavior, build a classification model from the training data during a training stage, and classify new behavior reports based on the plurality of classification results obtained in the dense layer of the CNN during the classification stage.

Accordingly, the accuracy of classifying the program behavior can be further improved.

A second aspect of the present invention provides a method for classifying program behavior, the method comprising the steps of: providing, as an input to a CNN a sequence of action-pattern pairs, wherein an action is indicative of a name or group of names of an Application Programing Interface, API, function call and a pattern is indicative of an argument or set of arguments of an API function call, transforming, in an embedding layer of the CNN, each action-pattern pair into an embedding vector and concatenating the embedding vectors to obtain a single vector, processing, in a convolution layer of the CNN, the single vector by a plurality of convolution filters to generate a series of output values per filter, determining, in a max-pooling layer of the CNN, a maximum output value in each series of output values, and transforming, in a dense layer of the CNN, the maximum output values into a plurality of classification results.

The method of the second aspect achieves all advantages and effects described above with respect to the device of the first aspect.

In an implementation form of the second aspect, the plurality of classification results includes the respective probabilities for the sequence of action-pattern pairs to fall into a plurality of defined classes of program behavior.

In a further implementation form of the second aspect, for transforming the sequence of action-pattern pairs into the embedding vectors, the method comprises inputting a first sequence of actions and a second sequence of patterns into input nodes of the CNN, wherein the input nodes of the CNN are connected to embedding nodes of the CNN in the embedding layer.

In a further implementation form of the second aspect, for processing the single vector in the convolution layer of the CNN, the convolution filters are two-dimensional convolution filters, and the method comprises producing a sum of the element-wise products between each convolution filter and the embedding vectors across a plurality of consecutive positions in the sequence of action-pattern pairs.

In a further implementation from of the second aspect, for determining the maximum output value in the max-pooling layer of the CNN, the method comprises moving an activation window of each convolution filter along the sequence of action-pattern pairs, and activate the convolution filter after each step of movement.

In a further implementation form of the second aspect for transforming the maximum output value in the dense layer of the CNN, the method comprises computing a weighted sum of the maximum output values, and applying a logistic regression transformation to the weighted sum.

In a further implementation form of the second aspect, the method further comprises generating a visual representation based on the activation values of the convolutional filters, the output of the convolutional layer of the CNN, the output of the max-pooling layer of the CNN, and/or weights used in the dense layer of the CNN.

In a further implementation form of the second aspect, the method comprises visualizing the program behavior according to the sequence of action-pattern pairs as the visual representation.

In a further implementation form of the second aspect, the visualization of the program behavior includes the contribution of each convolution filter, in particular the activation value of the convolution filter.

In a further implementation form of the second aspect, the method comprises visualizing decisions of the CNN as the visual representation.

In a further implementation form of the second aspect, the visualization unit is configured to visualize activations of convolutional filters as the visual representation.

In a further implementation form of the second aspect, the visualization of the filter activations shows the part of the sequence of action-pattern pairs that generates the maximum filter activation.

In a further implementation from the second aspect, the method comprises obtaining training data including a set of sample behavior reports, each behavior report being associated with a defined class of program behavior, building a classification model from the training data during a training stage, and classifying new behavior reports based on the plurality of classification results obtained in the dense layer of the CNN during the classification stage.

A third aspect of the present invention provides a computer program product comprising a program code for controlling a device according to the first aspect or any of its implementation forms, or for performing, when running on a computer, the method according to the second aspect or any of its implementation forms.

Accordingly, with the computer program product of the third aspect, the effects and advantages described above for the device of the first aspect and method of the second aspect can be achieved.

The aspects and implementation forms of the present invention allow classifying program behavior into a set of pre-defined classes with improved classification accuracy, and further allow explaining and visualizing, to an operator, the reasons for the classifications. From a technical point of view, the device of the first aspect (and the method of the second aspect) may include (or respectively be executed on) standard hardware, including one or more processors or other processing circuitry. Data is particularly stored on one or more standard storage mediums. Further, decisions may be visualized on one or more standard graphical devices. The classification process and the data visualization can also be carried out in a virtualized environment which, in turn, is executed on some physical computing medium, like by one or more processors.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF THE DRAWINGS

The above described aspects and implementation forms of the present invention will be explained in the following description of specific embodiments in relation to the enclosed drawings, in which
- FIG. 1: shows schematically a device according to an embodiment of the present invention.
- FIG. 2: shows schematically a general system architecture including a device according to an embodiment of the present invention.
- FIG. 3: shows schematically an operation of the convolution layer of a CNN of a device according to an embodiment of the present invention.
- FIG. 4: shows schematically an operation of a visualization unit of a device according to an embodiment of the present invention.
- FIG. 5: shows a part of a visualization of a behavior sequence.
- FIG. 6: shows a part of visualization of filter paths.
- FIG. 7: shows a flow-chart of a method according to an embodiment of the present invention.
- FIG. 8: shows schematically the computation of a behavior trace visualization.
- FIG. 9: shows schematically the computation of the filter path visualization.

### DETAILED DESCRIPTION OF THE EMBODIMENTS

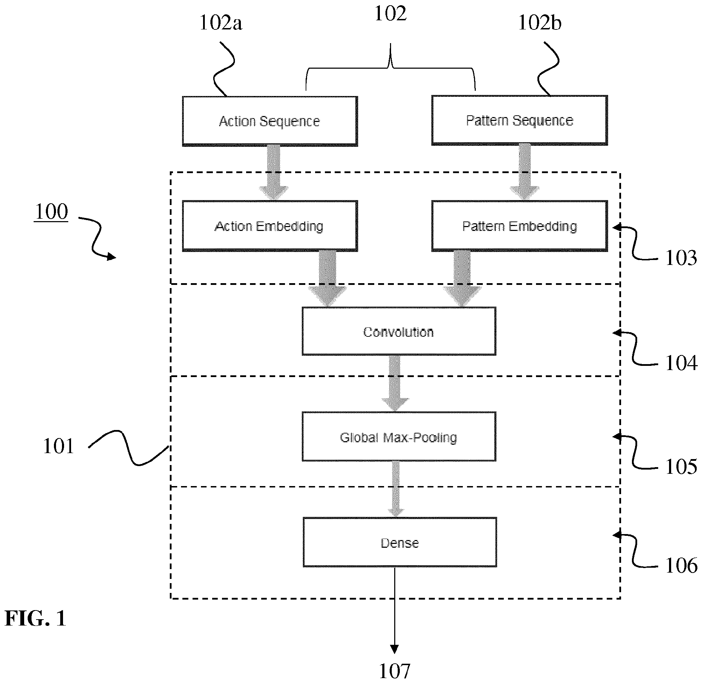

FIG. 1 shows a device 100 according to an embodiment of the present invention, particularly a device 100 configured to classify program behavior. The device 100 comprises a CNN 101, and may further comprise processing circuitry, e.g. one or more processors, and/or one or more data storage mediums. The CNN 101 may be implemented by one or more processors and storage mediums.

The device is configured, e.g. by means of processing circuitry like a processor, to provide, as an input to the CNN 101, a sequence of action-patterns pairs 102, e.g. as a sequence of actions 102a and a parallel sequence of patterns 102b. An action 102a is thereby indicative of a name or group of names of an API function call, and a pattern 102b is indicative of an argument or set of arguments of an API function call.

Then, the device 100 is configured, by means of the CNN 101, to carry out the following steps. The device 100 is configured to transform, in an embedding layer 103 of the CNN 101, each action-pattern pair 102 into an embedding vector and concatenate the embedding vectors to obtain a single vector. This may be regarded as "action embedding" and "pattern embedding", respectively. Further, the device 100 configured to process, in a convolution layer 104 of the CNN 101, the single vector by a plurality of convolution filters 300 to generate a series of output values per filter 300. This may generally be referred to as "convolution". The device 100 is further configured to determine, in a max-pooling layer 105 of the CNN 101, a maximum output value in each series of output values. Accordingly, this may be referred to as "global max-pooling". Finally, the device 100 is configured to transform, in a dense layer 106 of the CNN 101, the maximum output values into a plurality of classification results 107. The plurality of classification results 107 may include the respective probabilities for the sequence of action-pattern pairs 102 to fall into a plurality of defined classes of program behavior.

The device 100 shown in Fig. 1 and explained above includes a special CNN architecture, which enables high classification accuracy of sequences of API calls. Further details of the device 100 as shown in Fig. 1 are now described.

In an exemplary implementation, as the input to the CNN 101, the sequences {(*A₁, P₁*)*,* ..., (*A_{L}*, *P_{L}*),...} of action-pattern pairs 102 are used. An action A is either a specific name of an API function call, or a name for some abstract group of function call names. A pattern P is either a specific value representing arguments of a function call, or some abstract pattern from a pre-defined set of patterns, which is found in function call arguments. It is assumed that only one pattern 102b corresponds to each action 102a in a sequence. If multiple patterns 102b occur, such pattern combinations can be considered as meta-patterns, and the proposed solution can be applied in the device 100 without any modification.

The CNN architecture of the device 100 can be implemented using any neural network design library. A CNN 101 consists of several layers of processing nodes implementing different nonlinear transformations of inputs. The nodes are interconnected with edges having certain weights. The number of layers, the functions of each layer, and the specific connection topology may be determined by the network designer. Connection weights may be adjusted automatically during the training stage, for instance, using error backpropagation algorithms.

The embedding layer 103 of the CNN 101 transforms each action-pattern pair 102 into multidimensional numeric value. This is done by connecting the input nodes of the CNN 101 (accepting two sequences, of action 102a and pattern 102b, respectively) with the embedding nodes of the CNN 101. An embedding node transforms a sequence of integer numbers into a sequence of n-dimensional vectors, with the value n chosen in advance. The outputs of the respective embedding nodes for actions 102a and patterns 102b are concatenated and treated as a single vector afterwards.

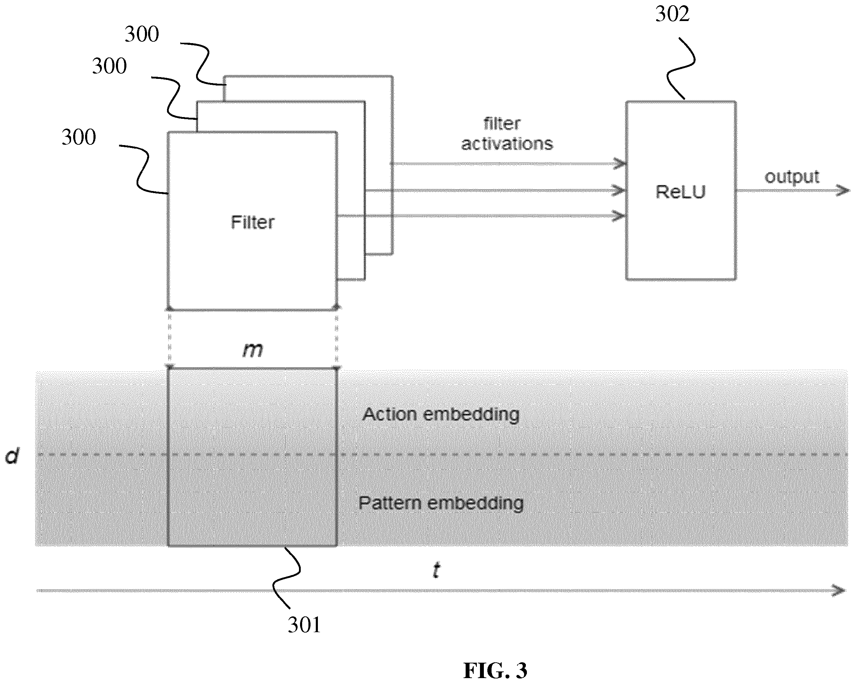

In the convolution layer 104 the joint embedded sequences are processed. This layer 104 consists of *k* convolution filters 300 (see e.g. FIG. 3), where the number *k* is set a priori. Each convolution filter 300 implements a weighted sum of its inputs, wherein the weights are determined automatically during a training phase, and applies a specified nonlinear transformation to this sum, e.g., a Rectified Linear Unit (ReLU) transformation 302. In the device 100, the convolution filters 300 are preferably two-dimensional. They sum up all values in n-dimensional embedding vectors (this is the first dimension of a filter 300) AND across *m* consecutive positions in a sequence (this is the second dimension of a filter 300).

Further, in the max pooling layer 105, each filter 300 is "moved" along the sequence and only the largest value of the filter output is passed to the subsequent dense layer 106. The max pooling layer 105 thus outputs *k* values, 1 for each filter 300.

The dense layer 106 of the CNN 101 implements a non-linear transformation of *k* filter values into c output values 107 corresponding to the number of classes in the original problem. This layer 106 computes a weighted sum of some of *k* filter outputs and applies a logistic regression transformation to this sum. The outputs of the logistic regression function correspond to the probability that a given sample belongs to each of the c classes.

The device 100 deals accurately with the problem of program behavior analysis. To this end, the device 100 may receive files of other security monitoring devices and may perform their execution in a controlled environment, a so called "sandbox". The result of this analysis may be a report stored in some common format, e.g., XML or JSON. A report typically contains entries about various events observed during program execution. Such events can be represented by a sequence of API function invocations comprising both function names and their arguments. In the device 100 the abstract notions of "actions" 102a corresponding to some pre-defined API function names and "patterns" 102b representing pre-defined features found in function arguments are introduced. Therefore, the device 100 characterizes the program behavior based on the sequences of action-pattern pairs 102. A most typical use case of the device 100 is classification of files into malicious and benign. Another common use case is classification of malicious files into specific non-overlapping families.

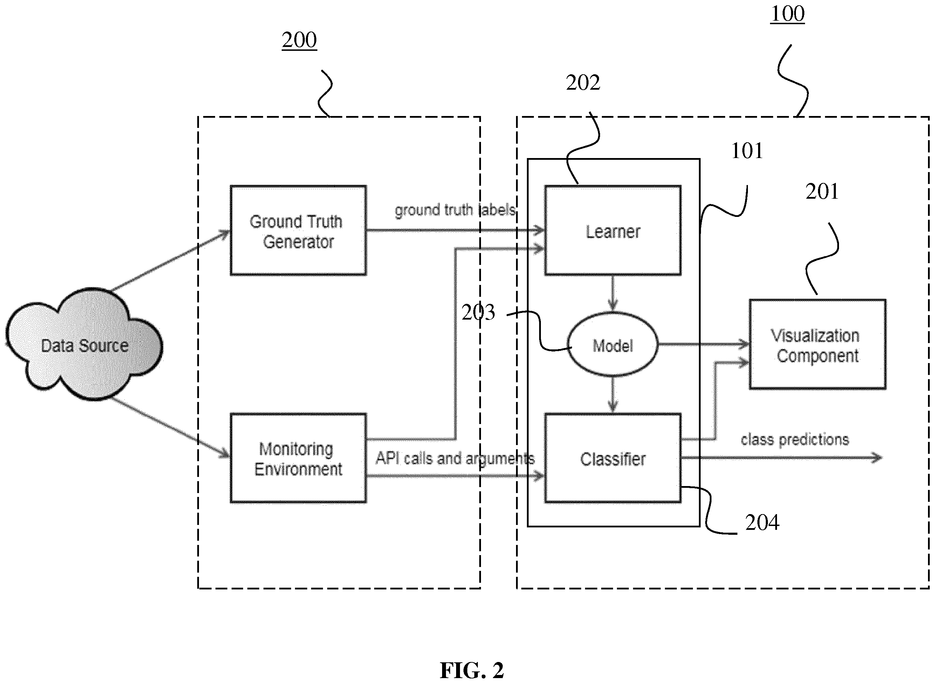

FIG. 2 shows the general system architecture including a device 100 according to an embodiment of the present invention, which builds on the device 100 shown in FIG. 1. In particular, the device 100 in the system architecture solves the behavior classification problem using a data-driven approach. The data is provided from a data source via a system 200 including a ground truth generator and a monitoring environment. The system 200 is connected to the device 100. In the device 100, the classification is particularly performed in two stages. In a learning stage, the device 100 is given sample behavior reports with attached known classification labels. A set of such sample reports is referred to as "training data". A learning component 202 of the device 100 builds a classification model from the training data. A classifier component 204 applies the model 203 to classify new behavior reports for which no classifications are known. Learning component 202, model 203 and classifier component 204 may be functionally implemented by the CNN 101. Further details thereof are now described.

For acting as the classifier component 204, the CNN 101 is given two sequences of fixed length as input. The action sequence comprises indices of abstract events, or actions 102a, representing typical groups of API function names. The pattern sequence comprises indices of pre-defined patterns 102a extracted from function arguments. Such patterns 102b can be, but are not limited to, specific file names and directories, specific Windows registry keys, names resolved DLLs, etc.

The embedding layer 103 encodes each action 102a and pattern 102b index by a numeric vector of a fixed dimension. This transformation is described here for actions 102a, but a similar transformation can be performed for patterns 102b.

Let X denote a sequence of actions 102a of length *L.* Let *n_{A}* denote the number of actions 102a recognized by the device 100. Each index value *i_{A}* is first transformed into an *n_{A}*-dimensional binary vector with 1 in the dimension ia and zeros otherwise. The sequence of such vectors corresponding to original indices X can be seen as matrix Y of size *n_{A}* ^{∗} *L.* Let *d_{A}* denotes the number of elements in numeric vectors to be used as description actions 102a. The embedding layer 103 transforms the matrix Y into another matrix *Z* by multiplying it with a weight matrix *W* of dimension *d_{A}* ^{∗} *n_{A}.* The coefficients of the matrix W are determined by the learning algorithm to be elucidated below.

An example of the operation of the convolution layer 104 is schematically depicted in FIG. 3. The convolution layer 104 receives as input two embedding matrices concatenated along the embedding dimension *d = d_{A}* + *d_{P}.* Such sequences are denoted as Z. The convolution layer 104 comprises *k* filters 300, each of dimension *d* ^{∗} *m,* where *m* denotes a window size 301 along the "time axis", i.e. embedding vectors of consecutive action-pattern pairs 102. Each filter *i* computes the convolution operation *Fᵢ* ⊙ *Zₘ* + *bᵢ,* where ⊙ denotes summation of element-wise products of two matrices, and *b* is a bias value, *F* and *b* are filter parameters to be computed by the training algorithm and *Zₘ* is an appropriate "slice" of the input matrix. The window 301 is moved along all positions in the matrix *Z* (with appropriate zero padding added to both ends of *Z*), and each filter 300 returns *l* output values for each position in *Z* used as the center of convolution. With *k* filters 300, the convolution operation produces is an *L* ^{∗} *k* matrix G. This final output of the convolution layer 103 is obtained by applying a rectified linear unit (ReLU) function to each element of the matrix *G.* This function returns the input value if it lies between 0 and 1 while clipping it to 0 or 1 otherwise.

The global max-pooling layer 105 selects the maximum value along the "time axis" for each filter 300. Its output is a *k*-dimensional vector *g.*

The dense layer 106 performs the final mapping of selected filter values to class predictions. For each class c to be predicted, the dense layer 106 computes the function *f*(*w_{c}* ^{∗} *g*) + *b,* where *f* is a suitable non-linear function (e.g., logistic regression) mapping input to real numbers between 0 and 1, and *w_{c}* is a weight vector and *b* is a bias value to be computed by the training algorithm.

During the learning stage, all parameters of the CNN 101, i.e., the embedding matrices *W_{A}* and *W_{P},* the filter parameters *F₁,..., Fₖ,* and the final layer weights *w₁*,...,*w_{c}*, are adjusted so as to minimize the error between the overall function computed by the network and target values provided for each training examples. By design, the function of the CNN 101 is differentiable with respect to parameters, hence for any differentiable error function, e.g., least squares, its partial derivatives can be computed with respect to all parameters of the CNN 101. Any standard gradient descent algorithm can thus be used to obtain a local optimum of parameter values minimizing the classification error. This procedure is known as "backpropagation".

The device 100 may further include a visualization unit 201 that computes the relevant explanatory features based on the CNN model and the report submitted to the classification system. In particular, the visualization unit 201 is configured to generate a visual representation as explained further below. The device 100 may also be connected to such a visualization unit 201 if the latter is implemented externally.

In fact, a major part of the device 100 according to an embodiment of the present invention is the visualization and explanation of its classification decisions. The key properties of the CNN 101, which are suitable for this purpose, are the raw convolution values computed by different filters 300 for different windows 301 in the input sequences, as well as the weights of each filter 300 in the final logistic regression layer (dense layer 106). Intuitively, the high convolution value and the high weight of a filter 300 in the dense layer 106 indicate that this filter 300 provides a strong contribution at the specific window 301 location to a positive decision for a given class. By tracing these properties for all entries in a sequence of action-pattern pairs 102, the device 100 can identify the specific elements in that sequence which exhibit particularly strong contributions of the given class probability.

Based on the traces of each filter's 300 predictions across the sequence, two types of visualization are particularly possible. Visualization of predictions for a given sequence adds individual filters' 300 trace together, and thus produces a curve, in which characteristic subsequences for each class can be identified. Further, it is also possible to "visualize" the meaning of specific filters 300. To this end, the traces of best predictive windows 301 for a given filter 300 are aggregated across multiple files. The integrated view of such traces characterizes which sequences produce high activation values for a given filter 300.

The visualization unit 201 operates by extracting and running a sample or a set of samples through the trained CNN 101, extracting appropriate internal variables of the CNN 101 for such sample runs, and computing certain derivatives of such variables that can visually represent the internal logic of the network operation.

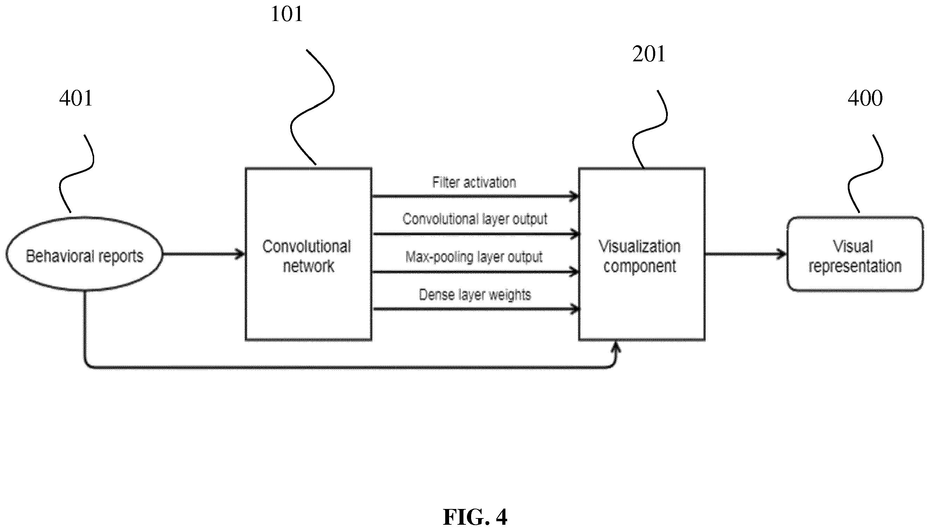

The operation of the visualization unit 201 is shown in more detail in Fig. 4. In particular, the visualization unit 201 is configured to generate a visual representation 400 based on the activation values of the convolutional filters 300, the output of the convolutional layer 104, the output of the max-pooling layer 105, and/or weights used in the dense layer 106.

The visualization unit 201 can produce several representations 400 providing different semantic views of the classification process:
- By producing a behavioral trace, the visualization unit 201 may illustrate the crucial feature of data that lead to a certain decision. It may highlight parts of the behavioral sequence that can have a strong impact on a specific CNN 101 decision (positive/negative or selection of a specific class).
- By producing a network decision trace, the visualization unit 201 may illustrate individual actions 102a leading to a CNN 101 decision. It may highlight parts of the behavioral sequence that were chosen by the CNN 101 as important factors in the computation of the decision function. A CNN decision trace typically highlights a subset of features highlighted by the behavioral trace.
- By producing a filter path, the visualization unit 201 may represent typical sequences that activate a certain filter 300. A filter path may be generated on the basis of a set of behavioral sequences with known classifications and highlights common patterns that lead to strong activations of the specific filter 300.

Detailed descriptions of these types of visual representations 400 are elucidated in the following.

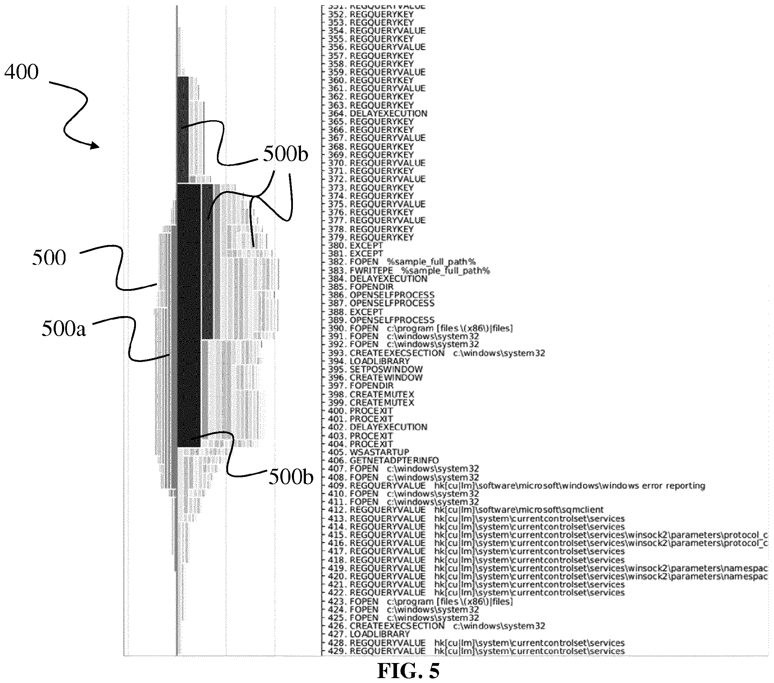

FIG. 5 shows as an example of the visual representation 400 a behavioral trace visualization 500, which illustrates an annotation (trace) of a program's recorded behavior, highlighting the most interesting parts of the execution as determined by a trained CNN 101. The behavior sequence may be annotated with e.g. 2 colors corresponding to 2 opposite beliefs about the program. For example, in malware detection one color (e.g. red, 500b) could be used to highlight parts of the program that are typical for malware, while the other (e.g. green, 500a) for those untypical for malware. For malware family recognition, one color (e.g. red, 500b) could be used to highlight parts of the program typical for one specific malware family, while the other (e.g. green, 500a) for those untypical for this malware family (one versus rest).

The example of FIG. 5 shows a part of a behavior sequence (behaviors from 352 to 429). The plot is split in the middle (0) to the red part (here right-hand-side in Fig. 5, 500b: positive, malicious) and the green part (here left-hand-side in Fig. 5, 500a: negative, benign). The contributions of filters 300 are shown as rectangles stacked on top of each other. For example, the big rectangle from action 373 to action 404 corresponds to the contribution of one filter 300.

Every rectangle has particularly 3 dimensions:
1. The vertical size (length) of the rectangle is equal to the window size w of convolution filters 300 (32 in this example). It spans the part of the behavior sequence where this convolutional filter 300 has matched.
2. The horizontal size (width) of the rectangle shows the strength of the match between the filter 300 and the sequence chunk as determined by the convolution operation. Wider rectangles add more weight (positive or negative) to the decision.
3. The color/shading of the rectangle shows how strongly it is associated with benign (green) or malicious (red) behavior. The color/shading corresponds to the weight assigned to the given filter 300 in the output layer of the CNN 101.

The rectangles may be stacked on top of each other, they might be misaligned. In this case of FIG. 5, the top rectangle looks "broken". For example, the second biggest red rectangle (between time steps 359 and 391) is stacked on top of the biggest red rectangle, and looks as if it was broken at time step 373. Nevertheless, the entire "broken" rectangle still refers to one specific filter.

The second part of the visualization, the combined score of all filters 300, may be depicted by the outline of the filter stack. That is, the combined width of all red filters (the red "hill") may show the total contribution of malicious filters to the final score. It can be seen that the hills grow and shrink with time, and the hill size can be used as an estimate of the malicious or benign activity of an individual behavior or a local region.

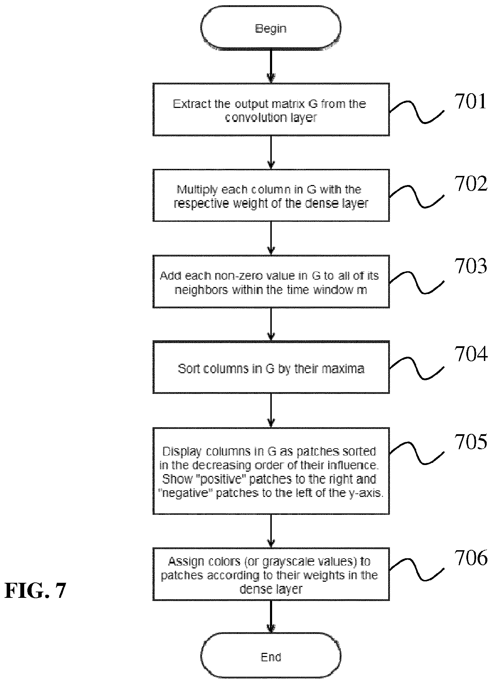

The visualization may be produced as follows. This algorithm for behavioral trace visualization is shown summarized in FIG. 7.
1. At block 701, for a given PE file, the output *G* of the convolutional layer 104 is recorded (matrix with *L*^{∗}*k* elements, where *k* is the total number of convolution filters 300 and *L* is the input sequence length).
2. At block 702, each column in *G* is scaled with the corresponding weight *wᵢ* of the dense layer 106. This reflects the influence of the *i*-th filter 300 on the final output of the CNN 101. The convolutional layer 104 applies the ReLU function on its output, resulting in non-negative values. Hence, *wᵢ* determines whether the *i*-th filter will push the decision towards the benign class (if *wᵢ* is negative), malicious class (*wᵢ* is positive).
3. At block 703, every non-zero activation in every *Gᵢ* is expanded to the surrounding window 301 of *m* time steps corresponding to the width of the convolutional filters 300. If the expanded activations overlap at some time steps, they are summed up. When plotted, the activations are visualized as an area under a step function. Non-overlapping activations thus look like rectangles and overlapping ones have more involved shapes.
4. At block 704, the columns in *Gᵢ* are sorted by their maxima (influence on outcome) and partitioned into 2 groups based on the sign of *wᵢ*.
5. At block 705, each column of the positive group is plotted, from most to least influential, as stacked patches on the positive side of the x-axis. The same is repeated for the negative group on the negative side of x-axis.
6. At block 706, each patch is colored using a color map centered at 0 and with a range of (*-p, p*)*,* where *p* = max(abs(*Gᵢⱼ*)). The color map assigns e.g. a green color to -*p,* a red color to *p* and a gray color to 0. Patches corresponding to the i-th filter are colored with the color corresponding to *wᵢ*.

As a further example of the visual representation 400, decision trace visualization attempts to visualize an approximate contribution of every behavior recorded in a program's execution to the final prediction of the CNN 101. It has the same visual characteristics as the trace visualization, but it is derived from a slightly different information.

While the trace visualization shows the internal view of the CNN 101 of the entire program execution, the CNN 101 does not use all this information in its decision-making. Instead, the max pooling layer 105 discards all but the highest activation for every convolutional filter 300, leading to an information loss. For a human attempting to understand a particular decision made by the CNN 101 on a certain program, it is instructive to use only the "surviving" maximum activations that make their way through the max pooling layer 105 and into the dense layer 106. Accordingly, the decision visualization differs from the trace visualization only in step 3 described above, where it discards all but the maximum activations for every filter 300. The remaining steps are the same as described above with respect to Fig. 7. Computation of decision visualization is identical to the one shown in Fig. 7 except that the matrix G is extracted from the max-pooling layer 105 instead of the convolution layer 104.

Decision visualization is applicable to both malware detection and malware family recognition, analogously to the trace visualization.

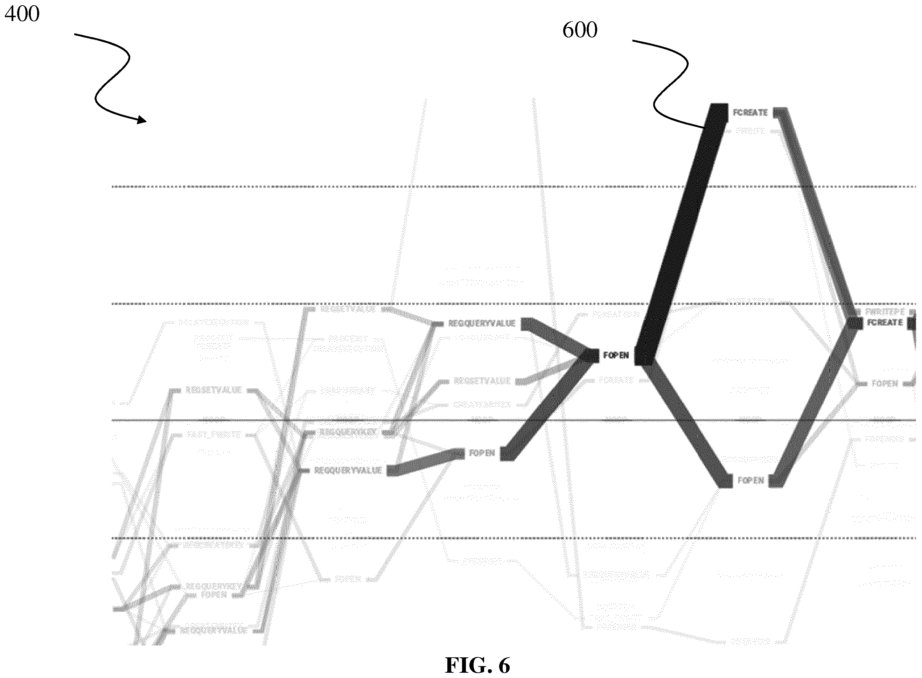

FIG. 6 shows further as another example of the visual representation 400 a filter path visualization 600, which can answer the question: what types of behaviors are most relevant for each filter 300?

To answer this question, the *k* convolutional filters 300 of the CNN 101 may be analyzed by the visualization unit 201. Each filter 300 is slid across the behavior sequence and its activation is recorded at every time step. The filter's activation reflects the degree to which it matches the behavioral sequence at the given time step. The match is computed not on a single action-pattern pair 102, but on a window 301 of *m* consecutive action-pattern pairs 102, where *m* is the filter length (see FIG. 3).

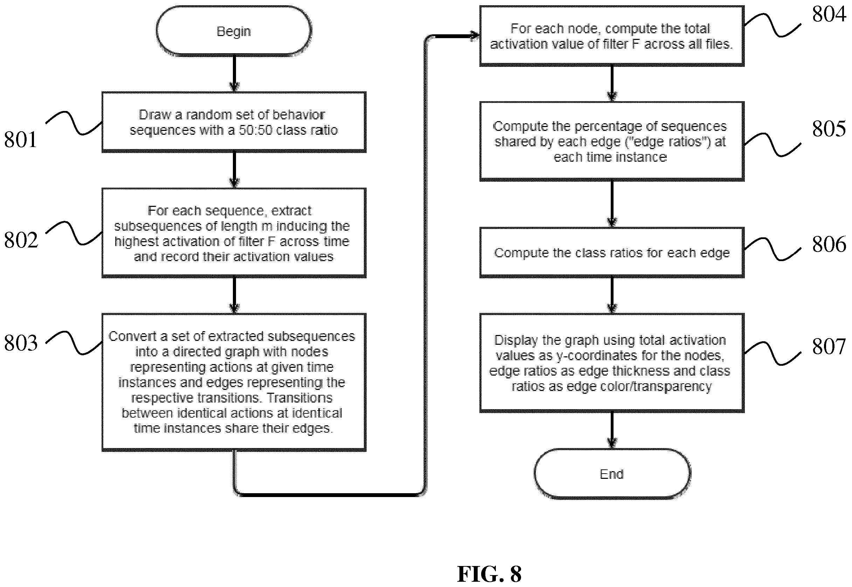

The filter path visualization 600 may be produced by the visualization unit 201 as described as follows with respect to FIG. 8:
1. At block 801, a random set of behavior sequences with a 50:50 class ratio is drawn.
2. At block 802, for each sequence, sub-sequences of length m are extracted including the highest activation of filter F across time, and there activation values are recorded.
3. At block 803, a set of extracted sub-sequences is converted into a directed graph with nodes representing actions at given time instances, and edges representing the respective transitions. Transitions between identical actions at identical time instances share their edges.
4. At block 804, for each note the total activation value of filter F across all files is computed.
5. At block 805, the percentage of sequences shared by each edge ("edge ratios) is computed at each time instance.
6. At block 806, the class ratios for each edge are computed.
7. At block 807, the graph is displayed using total activation values as y-coordinates for the nodes, edge ratios as edge thickness, and class ratios as edge color/transparency.

In the end, for each filter 300 a set of behavioral sequences with length *m* is obtained that highly activate this filter 300. These may be called *paths* going through the filter 300. They may then be grouped based on file label (malicious or benign) and plotted as shown in FIG. 6.

The plot of the filter path visualization 600 shown in Fig. 6 can be interpreted as follows:
- Horizontal axis shows the time. One filter 300 matches *m* time steps of the input behavioral sequence, and they are shown as time steps 0 to *m-*1 on the horizontal axis.
   - Vertical axis shows the contribution of every behavior to the filter activation at every time step. Positive contributions increase the kernel activation and negative ones lower it. For example, if the behavior *OpenFile* has a positive contribution in the first time step of the kernel, then a path which starts with *OpenFile* will be more likely to be matched by this kernel. Some behaviors have significantly higher contributions than others, and they can cause the filter 300 to be activated even in the presence of many behaviors with small negative contributions.
- Behaviors with positive contributions may be colored red, and those with negative contributions may be colored green. The filters 300 can, by design, match any behavior at any time step, however, usually a filter 300 will match a very specific set of behaviors at any given time step. Transparency may be used to print behavior names depending on the popularity of the behavior at the given time step, thus most behaviors are invisible because they are not matched at all. There is a special behavior NOOP that signals the end of file.
- Paths may be shown as segmented lines between 2 behaviors at 2 consecutive time steps. The color of a path segment may depend on the task at hand. For malware detection, it may show the percentage of paths from malicious files that pass through this segment. Mostly malicious segments are red, mostly benign are green, while segments with an equal mix of malicious and benign files may be yellow. The line of a path segment gets wider and more visible, the more paths pass through it.

The filter path visualization 600 has been described on the task of malware detection. It is also applicable to malware family recognition. In the latter case, it is applied in the same way as for malware detection, but with a different dataset and labeling. In the malware family recognition case, only the malicious files are kept (the benign files are not of interest for this task). Additionally, the filter path visualization 600 is applied in a one-vsrest fashion, i.e., for one family at a time. This is implemented by iteratively applying the visualization, every time labeling one of N classes as positive and all others as negative.

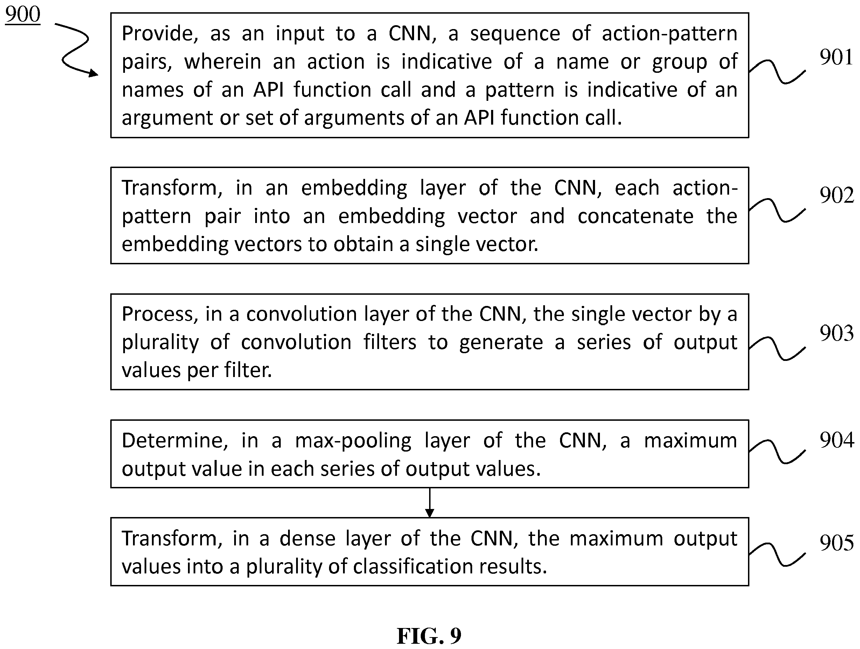

FIG. 9 shows a method 900 according to an embodiment of the present invention. In particular, the method 900 is classifying program behavior. The method 900 may be carried out by the device 100. The method 900 comprises a step 901 of providing, as an input to a CNN 101, a sequence of action-pattern pairs 102, wherein an action 102a is indicative of a name or group of names of an API function call and a pattern 102b is indicative of an argument or set of arguments of an API function call. Further, the method 900 comprises a step 902 of transforming, in an embedding layer 103 of the CNN 101, each action-pattern pair 102 into an embedding vector and concatenating the embedding vectors to obtain a single vector. Further, the method 900 comprises a step 903 of processing, in a convolution layer 104 of the CNN 101, the single vector by a plurality of convolution filters 300 to generate a series of output values per filter 300. Further, the method 900 comprises a step 904 of determining, in a max-pooling layer 105 of the CNN 101, a maximum output value in each series of output values. Finally, the method 900 comprises a step 905 of transforming, in a dense layer 106 of the CNN 101, the maximum output values into a plurality of classification results 107.

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. Device (100) for classifying program behavior into malicious or benign or for classifying malicious programs into a set of known families, the device comprising a Convolutional Neural Network, CNN, (101) and being configured to
provide, as an input to the CNN (101), a sequence of action-patterns pairs (102), wherein an action (102a) is indicative of a name or group of names of an Application Programing Interface, API, function call and a pattern (102b) is indicative of an argument or set of arguments of an API function call,
transform, in an embedding layer (103) of the CNN (101), each action-pattern pair (102) into an embedding vector and concatenate the embedding vectors to obtain a single vector,
process, in a convolution layer (104) of the CNN (101), the single vector by a plurality of convolution filters (300) to generate a series of output values per filter (300),
determine, in a max-pooling layer (105) of the CNN (101), a maximum output value in each series of output values, and
transform, in a dense layer (106) of the CNN (101), the maximum output values into a plurality of classification results (107),
wherein the plurality of classification results (107) includes the respective probabilities for the sequence of action-pattern pairs (102) to fall into a plurality of defined classes of program behavior.

2. Device (100) according to claim 1, wherein, for transforming the sequence of action-pattern pairs (102) into the embedding vectors, the device is configured to
input a first sequence of actions (102a) and a second sequence of patterns (102b) into input nodes of the CNN (101),
wherein the input nodes of the CNN (101) are connected to embedding nodes of the CNN (101) in the embedding layer (103).

3. Device (100) according to one of claims 1 or 2, wherein, for processing the single vector in the convolution layer (104) of the CNN (101),
the plurality of convolution filters (300) are configured to produce a sum of the element-wise products between each convolution filter (300) and the embedding vectors across a plurality of consecutive positions in the sequence of action-pattern pairs (102).

4. Device (100) according to one of claims 1 to 3, wherein, for determining the maximum output value in the max-pooling layer (105) of the CNN (101), the device (100) is configured to
move an activation window (301) of each convolution filter (300) along the sequence of action-pattern pairs (102), and activate the convolution (300) filter after each step of movement.

5. Device (100) according to one of claims 1 to 4, wherein for transforming the maximum output value in the dense layer (106) of the CNN (101), the device (100) is configured to
compute a weighted sum of the maximum output values, and
apply a logistic regression transformation to the weighted sum.

6. Device (100) according to one of claims 1 to 5, further comprising
a visualization unit (201) configured to generate a visual representation (400) based on the activation values of the convolutional filters (300), the output of the convolutional layer (104) of the CNN (101), the output of the max-pooling layer (105) of the CNN (101), and/or weights used in the dense layer (106) of the CNN (101).

7. Device (100) according to claim 6, wherein
the visualization unit (201) is configured to visualize the program behavior (500) according to the sequence of action-pattern pairs (102) as the visual representation (400).

8. Device according to claim 7, wherein
the visualization of the program behavior (500) includes the contribution of each convolution filter (300), in particular the activation value of the convolution filter (300).

9. Device (100) according to one of claims 6 to 8, wherein
the visualization unit (201) is configured to visualize decisions of the CNN (102) as the visual representation (400).

10. Device (100) according to one of claims 6 to 9, wherein
the visualization unit (201) is configured to visualize activations (600) of convolutional filters (300) as the visual representation (400) .

11. Device (100) according to claim 10, wherein
the visualization of the filter activations (600) shows the part of the sequence of action-pattern pairs (102) that generates the maximum filter activation.

12. Device (100) according to one of claims 1 to 11, configured to
obtain training data (202) including a set of sample behavior reports (401), each behavior report (401) being associated with a defined class of program behavior,
build a classification model (203) from the training data (202) during a training stage, and
classify new behavior reports (401) based on the plurality of classification results (107) obtained in the dense layer (106) of the CNN (101) during the classification stage.

13. Method (900) for classifying program behavior into malicious or benign or for classifying malicious programs into a set of known families, the method (900) comprising
providing (901), as an input to a Convolution Neural Network, CNN (101), a sequence of action-pattern pairs (102), wherein an action (102a) is indicative of a name or group of names of an Application Programing Interface, API, function call and a pattern (102b) is indicative of an argument or set of arguments of an API function call,
transforming (902), in an embedding layer (103) of the CNN (101), each action-pattern pair (102) into an embedding vector and concatenating the embedding vectors to obtain a single vector,
processing (903), in a convolution layer (104) of the CNN (101), the single vector by a plurality of convolution filters (300) to generate a series of output values per filter (300),
determining (904), in a max-pooling layer (105) of the CNN (101), a maximum output value in each series of output values, and
transforming (905), in a dense layer (106) of the CNN (101), the maximum output values into a plurality of classification results (107),
wherein the plurality of classification results (107) includes the respective probabilities for the sequence of action-pattern pairs (102) to fall into a plurality of defined classes of program behavior.

14. Computer program product comprising a program code for configuring a device (100) according to one of claims 1 to 12, or for performing, when running on a computer, the method (900) according to claim 13.

## Patentansprüche

1. Vorrichtung (100) zum Klassifizieren von Programmverhalten in böswillig oder harmlos oder zum Klassifizieren böswilliger Programme in eine Menge bekannter Familien, wobei die Vorrichtung ein neuronales Faltungsnetz, CNN, (101) umfasst und konfiguriert ist zum:
Bereitstellen als Eingabe für das CNN (101) einer Folge von Aktionsmusterpaaren (102), wobei eine Aktion (102a) einen Namen oder eine Gruppe von Namen eines Funktionsaufrufs einer Anwendungsprogrammierschnittstelle (API) angibt und ein Muster (102b) ein Argument oder eine Menge von Argumenten eines API-Funktionsaufrufs angibt,
Transformieren in einer Einbettungsschicht (103) des CNN (101) jedes Aktionsmusterpaares (102) in einen Einbettungsvektor und Verketten der Einbettungsvektoren, um einen einzigen Vektor zu erhalten,
Verarbeiten in einer Faltungsschicht (104) des CNN (101) des einzelnen Vektors durch mehrere Faltungsfilter (300), um eine Reihe von Ausgangswerten pro Filter (300) zu erzeugen,
Bestimmen in einer Max-Pooling-Schicht (105) des CNN (101) eines maximalen Ausgangswerts in jeder Reihe von Ausgangswerten und
Transformieren in einer dichten Schicht (106) des CNN (101) der maximalen Ausgangswerte in mehrere Klassifizierungsergebnisse (107),
wobei die mehreren Klassifizierungsergebnisse (107) die jeweiligen Wahrscheinlichkeiten dafür enthalten, dass die Folge von Aktionsmusterpaaren (102) in mehrere definierte Klassen von Programmverhalten fällt.

2. Vorrichtung (100) nach Anspruch 1, wobei die Vorrichtung zum Transformieren der Folge von Aktionsmusterpaaren (102) in die Einbettungsvektoren konfiguriert ist zum:
Eingeben einer ersten Folge von Aktionen (102a) und einer zweiten Folge von Mustern (102b) in die Eingangsknoten des CNN (101),
wobei die Eingangsknoten des CNN (101) mit Einbettungsknoten des CNN (101) in der Einbettungsschicht (103) verbunden sind.

3. Vorrichtung (100) nach einem der Ansprüche 1 oder 2, wobei zum Verarbeiten des einzelnen Vektors in der Faltungsschicht (104) des CNN (101) die mehreren Faltungsfilter (300) konfiguriert sind, eine Summe der elementweisen Produkte zwischen jedem Faltungsfilter (300) und den Einbettungsvektoren über mehrere aufeinanderfolgende Positionen in der Folge von Aktionsmusterpaaren (102) zu produzieren.

4. Vorrichtung (100) nach einem der Ansprüche 1 bis 3, wobei die Vorrichtung (100) zum Bestimmen des maximalen Ausgangswertes in der Max-Pooling-Schicht (105) des CNN (101) konfiguriert ist zum:
Verschieben eines Aktivierungsfensters (301) jedes Faltungsfilters (300) entlang der Folge von Aktionsmusterpaaren (102) und Aktivieren des Faltungsfilters (300) nach jedem Verschiebungsschritt.

5. Vorrichtung (100) nach einem der Ansprüche 1 bis 4, wobei die Vorrichtung (100) zum Transformieren des maximalen Ausgangswertes in der dichten Schicht (106) des CNN (101) konfiguriert ist zum:
Berechnen einer gewichteten Summe der maximalen Ausgangswerte und
Anwenden einer logistischen Regressionstransformation auf die gewichtete Summe.

6. Vorrichtung (100) nach einem der Ansprüche 1 bis 5, die ferner Folgendes umfasst:
eine Visualisierungseinheit (201), die konfiguriert ist, eine visuelle Repräsentation (400) basierend auf den Aktivierungswerten der Faltungsfilter (300), der Ausgabe der Faltungsschicht (104) des CNN (101), der Ausgabe der Max-Pooling-Schicht (105) des CNN (101) und/oder der in der dichten Schicht (106) des CNN (101) verwendeten Gewichte zu erzeugen.

7. Vorrichtung (100) nach Anspruch 6, wobei
die Visualisierungseinheit (201) konfiguriert ist, das Programmverhalten (500) gemäß der Folge von Aktionsmusterpaaren (102) als die visuelle Repräsentation (400) zu visualisieren.

8. Vorrichtung nach Anspruch 7, wobei
die Visualisierung des Programmverhaltens (500) den Beitrag jedes Faltungsfilters (300), insbesondere den Aktivierungswert des Faltungsfilters (300), enthält.

9. Vorrichtung (100) nach einem der Ansprüche 6 bis 8, wobei
die Visualisierungseinheit (201) konfiguriert ist, Entscheidungen des CNN (102) als die visuelle Repräsentation (400) zu visualisieren.

10. Vorrichtung (100) nach einem der Ansprüche 6 bis 9, wobei
die Visualisierungseinheit (201) konfiguriert ist, Aktivierungen (600) von Faltungsfiltern (300) als die visuelle Repräsentation (400) zu visualisieren.

11. Vorrichtung (100) nach Anspruch 10, wobei
die Visualisierung der Filteraktivierungen (600) den Teil der Folge von Aktionsmusterpaaren (102), der die maximale Filteraktivierung erzeugt, zeigt.

12. Vorrichtung (100) nach einem der Ansprüche 1 bis 11, die konfiguriert ist zum:
Erhalten von Trainingsdaten (202), die eine Menge von Beispiel-Verhaltensberichten (401) enthalten, wobei jeder Verhaltensbericht (401) einer definierten Klasse von Programmverhalten zugeordnet ist,
Aufbauen eines Klassifizierungsmodells (203) aus den Trainingsdaten (202) während einer Trainingsstufe, und
Klassifizieren neuer Verhaltensberichte (401) basierend auf den mehreren Klassifizierungsergebnissen (107), die in der dichten Schicht (106) des CNN (101) während der Klassifizierungsstufe erhalten werden.

13. Verfahren (900) zum Klassifizieren von Programmverhalten in böswillig oder harmlos oder zum Klassifizieren böswilliger Programme in eine Menge bekannter Familien, wobei das Verfahren (900) Folgendes umfasst:
Bereitstellen (901) als eine Eingabe für ein neuronales Faltungsnetz, CNN (101), einer Folge von Aktionsmusterpaaren (102), wobei eine Aktion (102a) einen Namen oder eine Gruppe von Namen eines Funktionsaufrufs einer Anwendungsprogrammierschnittstelle (API) angibt und ein Muster (102b) ein Argument oder eine Menge von Argumenten eines API-Funktionsaufrufs angibt,
Transformieren (902) in einer Einbettungsschicht (103) des CNN (101) jedes Aktionsmusterpaares (102) in einen Einbettungsvektor und Verketten der Einbettungsvektoren, um einen einzigen Vektor zu erhalten,
Verarbeiten (903) in einer Faltungsschicht (104) des CNN (101) des einzelnen Vektors durch mehrere Faltungsfilter (300), um eine Reihe von Ausgangswerten pro Filter (300) zu erzeugen,
Bestimmen (904) in einer Max-Pooling-Schicht (105) des CNN (101) eines maximalen Ausgangswertes in jeder Reihe von Ausgangswerten und
Transformieren (905) in einer dichten Schicht (106) des CNN (101) der maximalen Ausgangswerte in mehrere Klassifizierungsergebnisse (107),
wobei die mehreren Klassifizierungsergebnisse (107) die jeweiligen Wahrscheinlichkeiten dafür enthalten, dass die Folge von Aktionsmusterpaaren (102) in mehrere definierte Klassen von Programmverhalten fällt.

14. Computerprogrammprodukt, das einen Programmcode zum Konfigurieren einer Vorrichtung (100) nach einem der Ansprüche 1 bis 12 oder zum Ausführen des Verfahrens (900) nach Anspruch 13, wenn er auf einem Computer abläuft, umfasst.

## Revendications

1. Dispositif (100) de classement de comportement de programme en programmes malveillants ou bénins ou de classement de programmes malveillants dans un ensemble de familles connues, le dispositif comprenant un réseau neuronal convolutif, CNN, (101) et étant configuré pour
fournir, en tant qu'entrée au CNN (101), une séquence de paires action-motif (102), une action (102a) étant indicative d'un nom ou d'un groupe de noms d'un appel de fonction d'interface de programmation d'application, API, et un motif (102b) étant indicatif d'un argument ou d'un ensemble d'arguments d'un appel de fonction d'API, transformer, dans une couche d'intégration (103) du CNN (101), chaque paire de motifs d'action (102) en un vecteur d'intégration et concaténer les vecteurs d'intégration pour obtenir un vecteur unique,
traiter, dans une couche de convolution (104) du CNN (101), le vecteur unique par une pluralité de filtres de convolution (300) pour générer une série de valeurs de sortie par filtre (300),
déterminer, dans une couche de regroupement maximal (105) du CNN (101), une valeur de sortie maximale dans chaque série de valeurs de sortie, et
transformer, dans une couche dense (106) du CNN (101), les valeurs de sortie maximales en une pluralité de résultats de classification (107),
la pluralité de résultats de classification (107) comprenant les probabilités respectives pour la séquence de paires action-motif (102) de tomber dans une pluralité de classes définies de comportement de programme.

2. Dispositif (100) selon la revendication 1, pour transformer la séquence de paires action-motif (102) en vecteurs d'intégration, le dispositif étant configuré pour entrer une première séquence d'actions (102a) et une seconde séquence de motifs (102b) dans des noeuds d'entrée du CNN (101),
les noeuds d'entrée du CNN (101) étant connectés à des noeuds d'intégration du CNN (101) dans la couche d'intégration (103).

3. Dispositif (100) selon l'une des revendications 1 et 2, pour traiter le vecteur unique dans la couche de convolution (104) du CNN (101),
la pluralité de filtres de convolution (300) étant configurés pour produire une somme des produits par éléments entre chaque filtre de convolution (300) et les vecteurs d'intégration sur une pluralité de positions consécutives dans la séquence de paires action-motif (102).

4. Dispositif (100) selon l'une des revendications 1 à 3, pour déterminer la valeur de sortie maximale dans la couche de regroupement maximal (105) du CNN (101), le dispositif (100) étant configuré pour
déplacer une fenêtre d'activation (301) de chaque filtre de convolution (300) le long de la séquence de paires action-motif (102), et activer le filtre de convolution (300) après chaque étape de déplacement.

5. Dispositif (100) selon l'une des revendications 1 à 4, pour transformer la valeur de sortie maximale dans la couche dense (106) du CNN (101), le dispositif (100) étant configuré pour
calculer une somme pondérée des valeurs de sortie maximales, et
appliquer une transformation de régression logistique à la somme pondérée.

6. Dispositif (100) selon l'une des revendications 1 à 5, comprenant en outre :
une unité de visualisation (201) configurée pour générer une représentation visuelle (400) basée sur les valeurs d'activation des filtres convolutifs (300), la sortie de la couche convolutive (104) du CNN (101), la sortie de la couche de regroupement maximal (105) du CNN (101), et/ou les poids utilisés dans la couche dense (106) du CNN (101).

7. Dispositif (100) selon la revendication 6,
l'unité de visualisation (201) étant configurée pour visualiser le comportement de programme (500) selon la séquence de paires action-motif (102) en tant que représentation visuelle (400).

8. Dispositif selon la revendication 7,
la visualisation du comportement de programme (500) comprenant la contribution de chaque filtre de convolution (300), en particulier la valeur d'activation du filtre de convolution (300).

9. Dispositif (100) selon l'une des revendications 6 à 8,
l'unité de visualisation (201) étant configurée pour visualiser des décisions du CNN (102) en tant que représentation visuelle (400).

10. Dispositif (100) selon l'une des revendications 6 à 9,
l'unité de visualisation (201) étant configurée pour visualiser des activations (600) de filtres convolutifs (300) en tant que représentation visuelle (400).

11. Dispositif (100) selon la revendication 10,
la visualisation des activations (600) de filtres montrant la partie de la séquence de paires action-motif (102) qui génère l'activation de filtre maximale.

12. Dispositif (100) selon l'une des revendications 1 à 11, configuré pour :
obtenir des données d'apprentissage (202) comprenant un ensemble d'échantillons de rapports de comportement (401), chaque rapport de comportement (401) étant associé à une classe définie de comportement de programme,
construire un modèle de classification (203) à partir des données d'apprentissage (202) pendant une étape d'apprentissage, et
classer de nouveaux rapports de comportement (401) sur la base de la pluralité de résultats de classification (107) obtenus dans la couche dense (106) du CNN (101) pendant l'étape de classification.

13. Procédé (900) de classement de comportement de programme en programmes malveillants ou bénins ou de classement de programmes malveillants dans un ensemble de familles connues, le procédé (900) comprenant :
la fourniture (901), en tant qu'entrée à un réseau neuronal convolutif, CNN (101), d'une séquence de paires action-motif (102), une action (102a) étant indicative d'un nom ou d'un groupe de noms d'un appel de fonction d'interface de programmation d'application, API, et un motif (102b) étant indicatif d'un argument ou d'un ensemble d'arguments d'un appel de fonction d'API,
la transformation (902), dans une couche d'intégration (103) du CNN (101), de chaque paire action-motif (102) en un vecteur d'intégration et la concaténation des vecteurs d'intégration pour obtenir un vecteur unique,
le traitement (903), dans une couche de convolution (104) du CNN (101), du vecteur unique par une pluralité de filtres de convolution (300) pour générer une série de valeurs de sortie par filtre (300),
la détermination (904), dans une couche de regroupement maximal (105) du CNN (101), d'une valeur de sortie maximale dans chaque série de valeurs de sortie, et
la transformation (905), dans une couche dense (106) du CNN (101), des valeurs de sortie maximales en une pluralité de résultats de classification (107),
la pluralité de résultats de classification (107) comprenant les probabilités respectives pour la séquence de paires action-motif (102) de tomber dans une pluralité de classes définies de comportement de programme.

14. Produit de programme informatique comprenant un code de programme pour configurer un dispositif (100) selon l'une des revendications 1 à 12, ou pour réaliser, lorsqu'il est exécuté sur un ordinateur, le procédé (900) selon la revendication 13.
